(19) Europäisches Patentamt
European Patent Office
Office européen des brevets

(11) Publication number: **0 357 149 A2**

(12) **EUROPEAN PATENT APPLICATION**

(21) Application number: 89202201.3

(51) Int. Cl.5: **A01N 25/30 , A01N 25/10**

(22) Date of filing: 31.08.89

(30) Priority: 01.09.88 US 239244

(43) Date of publication of application: 07.03.90 Bulletin 90/10

(84) Designated Contracting States: CH DE ES FR GB IT LI NL

(71) Applicant: THE DOW CHEMICAL COMPANY
2030 Dow Center, Abbott Road
Midland MI 48640(US)

(72) Inventor: Wessling, Ritchie A.
5007 Nurmi Drive
Midland, Michigan 48640(US)
Inventor: Pickelman, Dale M.
319 Price
Auburn, Michigan 48611(US)
Inventor: Wujek, Dennis G.
5013 Stony Creek Drive
Midland, Michigan 48640(US)

(74) Representative: Smulders, Theodorus A.H.J., Ir. et al
Vereenigde Octrooibureaux Nieuwe Parklaan 107
NL-2587 BP 's-Gravenhage(NL)

(54) **Stable concentrate formulations and emulsions of waterinsoluble organic pesticides, their use and preparation.**

(57) Stable emulsion formulations of water-insoluble organic pesticides are prepared by commingling the pesticide with an aqueous dispersion of a graft copolymer comprised of a reactive polymeric surfactant (RPS) base polymer and a nonionic hydrophobic grafted composition whereby the surfactant on the surface is bound thereto by the graft chains to a particle which is an aggregate of the RPS graft and pesticide. The resulting product is more stable to coalescence than emulsions made with conventional or polymeric surfactants.

EP 0 357 149 A2

Xerox Copy Centre

# STABLE CONCENTRATE FORMULATIONS AND EMULSIONS OF WATER-INSOLUBLE ORGANIC PESTICIDES, THEIR USE AND PREPARATION

The present invention concerns a formulation, its preparation and use. The formulations are stable as concentrates for water-insoluble organic pesticides.

As shown in U.S. Patent 3,400,093, known methods for incorporating water-insoluble organic pesticides into water-based systems have been unsatisfactory in that the pesticides tend to settle out and do not remain uniformly dispersed in said systems. The U.S. Patent discloses a solution to that problem by employing emulsion polymerization of vinyl-type monomers in the presence of the pesticide. However, certain pesticides, such as chlorpyrifos and chlorpyrifosmethyl, tend to hydrolyze if heated to polymerization temperatures for extended periods of time and, in addition, the presence of a pesticide in a monomer will influence the polymerization to some degree, e.g., the rate of polymerization, the conversion and/or the molecular weight of the polymer produced.

U.S. Patent 4,303,642 teaches that the above problems may be overcome by adding the pesticide to a finished latex wherein the polymeric particles were in a size range of from 0.03 to 20 microns, and increases in pesticide efficiency were, indeed demonstrated, although optimum stability and transfer of the pesticide through soil were not obtained.

Rogiers and Bognolo, in a paper presented at the Sixth International Congress of Pesticide Chemistry, Ottawa, Canada, August 10-15, 1986, reported on the stabilization of an Ethirincol suspension concentrate with a graft stabilizer of a polymethylmethacrylate-polymethacrylic acid grafted with polyethylene oxide.

U.S. Patents 4,199,363 and 4,203,716 disclose a process for uniformly dispersing hydrophobic materials through hydrophilic colloid layers, such as photographically useful layers containing gelatin.

Soil pesticides are usually incorporated into the soil mechanically or are spread on the surface to be leached into the soil by rainfall. In either case, the pesticide may not be able to function properly because it becomes immobilized at the point of application. This will certainly be the case for large hydrophobic molecules and the problem is compounded further if the carrier is itself a large hydrophobic particle.

In conventional formulations the surfactants are absorbed on the particle surface and are in equilibrium with the aqueous phase and the surface of soil particles. Since the surface area is so large, the soil tends to act as an infinite sink of low surfactant concentration and much of the surfactant initially on the pesticide particle transfers to the soil, whereupon the pesticide particle either deposits on the soil or flocculates, thereby losing the ability to migrate through the soil.

In accordance with the present invention, a pesticidal formulation which comprises a non-aqueous emulsifiable concentrate of water-insoluble organic pesticides are formed by an association of the pesticide with an aqueous dispersion of a graft copolymer comprising a ionic reactive polymeric surfactant (RPS) base polymer and a nonionic hydrophobic grafted composition. This association results in the formation of a stable aqueous emulsion formulation when water is added. It not itself liquid, the organic pesticide can be dispersed in the aqueous dispersion by first melting or dissolving it in a water-insoluble organic solvent. These final pesticidal formulations are very capable of migrating through the soil to which they are applied and are not deposited on the soil nor is there any flocculation of the pesticide particles.

It has been found that the said graft copolymer spontaneously absorbs organic pesticides with low water solubility upon simple commingling. Because the graft chains are completely water insoluble they prevent the graft copolymer aggregates from dissolving into free molecules. The graft chains can be selected to have a high affinity for the material (pesticide) to be emulsified and once formed the emulsion is very stable because the stabilizing polymeric surfactant on the surface is bound on the surface of a particle which is an aggregate comprised of the RPS graft and pesticide by the graft chains of the copolymer that are dissolved in it.

The preferred formulations of the present invention are anionic and the reactive polymeric surfactant (RPS) in these cases is selected to optimize stability and migratory ability of the particle in the soil. Such surfactants are obtained by using a combination of pH independent anionic monomers and nonionic monomers. Combinations of sulfonate monomers and nonionic hydrophobic and hydrophilic units form the ionic backbone. Preferably, the backbone of the (RPS) is formed by the copolymerization of ethylenically unsaturated monomers. The resulting aqueous emulsions product is much more stable to coalescence than emulsions made with conventional surfactants.

The reactive polymeric surfactant (RPS) base polymers that can be used in the present invention include some of the cationic polymers described in U.S. Patents 4,337,185 and the anionic polymers described in 4,427,819. Such polymers advantageously have a hydrophilic backbone and a grafted hydrophobic side-chain. These polymers spontaneously aggregate to form non-dissociating polymeric

micelles. These micellar structures are the seed particles mentioned in the above-referenced patents.

The process for preparing the a stable pesticidal formulation of the present invention comprises causing an association of (1) a water insoluble organic pesticide and (2) an aqueous dispersion of a graft copolymer comprised of a pH independent reactive polymeric surfactant and at least one nonionic hydrophobic monomer whereby the surfactant is bound on the surface of a particle which is an aggregate comprised of the RPS graft and pesticide by the graft chains of the copolymer.

The aqueous based polymeric micelles are commingled directly with a liquid pesticide at ambient conditions or heated to liquify a crystalline pesticide until a homogeneous dispersion results. In order for the polymeric micelle to accommodate significant levels of the hydrophobic pesticide, the graft copolymer composed of an ionic main chain with pendant nonionic graft chains must stay at the surface of the particle to provide colloidal stability and therefore must not be crosslinked, i.e., must not be a microgel.

The particle is defined as an aggregate of the RPS graft, pesticide and water insoluble additives in which the graft chains and water insoluble components are mutually compatible. An anionic hydrophilic organic backbone provides stabilization against flocculation or adsorption on the soil particles. A cationic hydrophilic organic backbone also provides stabilization against flocculation and enhances wetting and adhesion to foliage.

In the compositions of this invention, the graft chains form the dispersed particle and the backbone forms the stabilizing surface. The graft copolymerization process allows each component to be independently optimized to provide the most effective desired emulsion.

Water miscible coupling solvents can also be incorporated as an aid for the movement of the pesticide through the aqueous phase to the particle. The coupling solvent, e.g., acetone, methyl ethyl ketone, tetrahydrofuran, a $C_1$-$C_4$ alcohol, can be optionally, stripped from the mixture after the pesticide is incorporated.

It may be advantageous to employ other additives to aid in the preparation of the formulations. A cosurfactant, such as a ethylene oxide nonionic adduct of alkyl phenols having a hydrophilic-lipophilic balance value (HLB) in the range of from 10 to 13, can be used to facilitate transfer of pesticide or a plasticized pesticide solution through the aqueous phase to the hosting particle.

Water insoluble cosolvents or plasticizers of low volatility are also useful in preparing the formulations of the present invention. They are used to form plasticized particles which are solutions of the pesticides and cosolvents in the particles that remain non-crystalline for optimum low temperature stability and reconstitution of formulations after freeze-thaw cycling. It is desirable for the cosolvent to be water insoluble, and compatible with both the pesticide and the hydrophobic graft chains of the graft copolymer. This gives desirable water-based formulations with excellent stability, dilutability, and movement in the soil. Cosolvents of choice include, for example, plasticizing methyl esters of fatty acids such as caproic, lauric, myristic, oleic and tallowic; glycerides such as the oils of cottonseed, soybean, castor bean, and corn; triacetin, Citroflex™ A4, and alkyl aromatics. Preferred plasticizers are Citroflex™ A4 and the methyl esters of caproic, lauric, myristic, and oleic acid. Preferred cosurfactants for optimum stability are polyoxylated nonylphenols where the average number of moles of ethylene oxide ranges from 4 to 10.

Polymers and pesticides can also be blended with a cosolvent and/or cosurfactant and then dispersed in water by a phase inversion process which provides an oil-in-water emulsion similar to that obtained via the aforementioned direct emulsion method. The anionic particles are, once formed in water, in a colloidal sense, very stable, maintaining their identity in the soil and functioning as a reservoir of pesticide, which when applied to the ground, can move very well through the soil. The cationic particles are also stable in a colloidal sense and when sprayed aerially provide enhanced adhesion to foliage and, if desired, they provide immobilization of the pesticides on the soil surface for special pesticidal uses.

An emulsifiable concentrate can be formed by mixing the RPS/GRAFT Copolymer, nonionic cosurfactant, active pesticide, and a coupling solvent if needed to solvate the pesticide with the copolymer and then stripping off the solvent and water to form a non-aqueous based concentrate. A preferred process involves addition of pesticide or plasticized pesticide solution to a nonaqueous mixture of RPS/GRAFT Copolymer and nonionic cosurfactant to form an emulsifiable concentrate. Addition of a coupling solvent to this formulation is not an essential part of the concentrate, however, desirable coupling solvents are those possessing a low volatility, such as, for example, tetrahydrofural alcohol, various alkoxy alkanols, 1-methyl-2-pyrrolidinone, dimethylformamide, and the like.

The use of an optional cosolvent and/or cosurfactant allows for the preparation of emulsifiable concentrates wherein an nonaqueous blend of RPS/GRAFT Copolymer, the active compound, cosolvent and/or cosurfactant can be subsequently dispersed in water to form an aqueous emulsion. The cosolvent must be compatible with the active ingredient (pesticide) and the hydrophobic polymeric side-chains of the RPS/GRAFT Copolymer. The cosolvent can be used to depress the melting point of the active ingredient,

improve compatibility with the graft copolymer, and aid in release of said ingredient when needed.

Generally the amount of the water insoluble organic pesticides which can be present in association with the ionic/nonionic graft copolymer is in the range of from 1:50 to 10:1 in terms of a weight ratio of the pesticide to the RPS/GRAFT Copolymer.

Desirable and preferred cosolvents and cosurfactants used for the preparation of stable emulsifiable concentrates are the same as those previously mentioned for the preparation of formulations by direct association of aqueous graft copolymer and pesticide.

Representative water-insoluble organic pesticides which can be employed in the practice of the present invention include one or more pesticides from, for example, the classes of acylurea insecticides, organophosphorous insecticides, pyrethroid insecticides, aryloxyaryl herbicides and sulfonamide herbicides. Examples of such pesticides include, for example:

the acylurea insecticides described in U.S. Patent Nos. 4,148,902; 4,173,637 and Reissue 30,563, and particularly 1-[3,5-dichloro-4-((5-trifluoromethyl)-3-chloro-2-pyridyloxy)phenyl]-3-(2,6-difluorobenzoyl) urea (trade name Chlorfluazuron);

the organophosphorous insecticides described in U.S. Patent Nos. 3,244,586; 4,429,125; 4,654,329 and 4,729,987, particularly chlorpyrifos and chlorpyrifos-methyl;

the pyrethroid insecticides such as, for example, cypermethrin, permethrin and fenvalerate;

the aryloxyaryl herbicides described in U.S. Patent Nos. 4,550,192; 4,551,170 and 4,750,931, particularly 2-(4-((5-trifluoromethyl)-2-pyridinyl)oxy)phenoxy)propanoic acid; 2-(4-((3-chloro-5-trifluoromethyl)-2-pyridinyl)-oxy)phenoxy)propanoic acid, methyl ester; 2-(4-((3-chloro-5-trifluoromethyl)-2-pyridinyl)oxy)phenoxy)-propanoic acid, ethyl ester; and 2-(4-((3-fluoro-5-trifluoromethyl)-2-pyridinyl)oxy)phenoxy)propanoic acid, methyl ester;

the sulfonamide herbicides described in U.S. Patent Nos. 4,731,446; 4,740,233; 4,741,764 and 4,755,212, particularly N-(2,6-dichlorophenyl)-5,7-dimethoxy-1,2,4-triazolo(1,5a)pyrimidine-2-sulfonamide; N-(2,6-dichloro-3-methylphenyl)-5,7-dimethoxy-1,2,4-triazolo-(1,5a)pyrimidine-2-sulfonamide; N- (2,6-dichlorophenyl)-5-methyl-7-methylthio-1,2,4-triazolo(1,5a)pyrimidine-2-sulfonamide; N-(2-trifluoromethylphenyl)-5-methyl-7-methylthio-1,2,4-triazolo-(1,5a)pyrimidine-2-sulfonamide; N-(2,6-dichloro-3-methylphenyl)-7-methoxy-5-methyl-1,2,4-triazolo(1,5a)pyrimidine-2-sulfonamide; and N-(2,6-dichloro-3-methylphenyl)-7-ethoxy-5-methyl-1,2,4-triazolo(1,5a)pyrimidine-2-sulfonamide.

The insecticidal compounds of the present invention impart remarkable insecticidal effect to larvae of Lepidoptera, Coleoptera, Hymenoptera and Diptera, for example, larvae of the following insects:

diamondback moth (*Plutella xylostella*), common white (*Pieris rapae crucivora*), cabbage armyworm (*Mamesta brassicae*), cabbage looper (*Plusia Nigrisigma*), tobacco cutworm (*Prodenia litura*), smoller citrus dog (*Papilo xuthus*), small blackish cochlid (*Seopelodes contracta*), fall webworm (*Hyphantria cunea*), gypsy moth (*Lymantria dispar*), rice stem borer (*Chilo suppressalis*), bollworm (*Heliothis zea*), tobacco budworm (*Heliothis virescens*), bollweevil (*Anthonomus grandis*), confused flour beetle (*Tribolium confusum*), colorado potato beetle (*Leptinotarsa decemlineata*), sawfly (*Neurotoma irdescens*), Culex mosquito (*Culex pipiens pallens*), mosquito (*Culex pipiens molestus*).

The herbicidal compounds of the present invention are useful in the treatment of plants such as, for example, corn (*Zea mays*), rice (*Oryza sativa*), wheat (*Triticum aestivum*), barnyardgrass (*Echinochloa crus-galli*), crabgrass, yellow foxtail (*Setaria lutescens*), Johnson grass (*Sorghum halephense*) and wild oats (*Avena fatua*).

The carrier employed to transport the pesticide should be a small hydrophilic colloidal particle with a high negative charge to promote rapid movement in the soil. In order to be effective, however, the particle must be stable against flocculation by polyvalent cations in the soil, and the ionic groups must be bound to the particle to avoid redistribution of the stabilizing groups, i.e., surfactant, to the surface of the soil particles. Because carboxylated latexes are not stable against flocculation by polyvalent cations they are not suitable for this use. In the present invention the problems of a lack of the ability of the particle to migrate through the soil is avoided.

The nonionic, hydrophobic units suitably are derived from any copolymerizable ethylenically unsaturated monomer which, when in the form of an amorphous homopolymer, would have a solubility in water of less than 0.1 percent. Specifically, styrene and/or methyl methacrylate function as the nonionic hydrophobic units. However, it should be noted that a backbone containing nonpolar sequences like styrene will require proportionately more ionic or hydrophilic units to achieve the same level of activity.

In some cases, it is advantageous to employ small amounts (e.g., usually less than about 15 weight percent and preferably from 0 to 5 weight percent based upon the weight of the instant reactive polymeric surfactants) of very hydrophilic but not ionic comonomers for control of the surface activity and water solubility of the interpolymeric polyelectrolyte without having to use more of the ionic comonomers.

Acrylamide, methacrylamide, hydroxyethyl acrylate and hydroxypropyl acrylate are particularly useful for this purpose.

Low concentrations of monomers with weak acid or weak base groups and salts thereof may also be used provided that the pH independence of the RPS is not substantially altered, e.g., a minor amount of a vinyl monomer such as acrylic acid or aminoethyl methacrylate (or the hydrochloride salt thereof) could be included to promote adhesion, serve as reactive sites, and the like.

The RPS also contains grafting sites as described in the prior art. Grafting sites are typically vinyl groups linked to the backbone through an ester, amide or quaternary ammonium connection.

The side-chain composition copolymerized with these grafting sites is selected to compatibilize the cosurfactant cosolvent with the active ingredient. The side-chain composition must be substantially hydrophobic and present in sufficient amount to render the graft copolymer aggregate nondissociable in water.

Preferably the graft polymer composition has a glass transition temperature (Tg) below the use temperature, preferably less than 30 °C. (the Tg is easily determined using conventional differential thermal analysis). Compatibility with the active ingredient can be tailored by copolymerizing the appropriate nonionic hydrophobic monomers. Selection can be made on the basis of a typical formulation scheme employing, e.g., known solubility parameters.

Typical monomers useful in preparing the side-chain graft polymers used in the invention include, for example, styrenics, acrylates, methacrylates, isoprene, butadiene, acrylonitrile, vinyl acetate, vinyl chloride, and vinylidene chloride. By copolymerization, the side-chain graft polymers having desired properties are obtained. Copolymer selections are made from known techniques for matching compatibility, solubility, and maintaining proper Tg.

The number and length of the graft chains can be optimized for specific formulations. Typically, the side-chain length should be minimized to facilitate rapid phase inversion of the emulsifiable concentrate. However, the molecular weight must be high enough to compatibilize with the oil phase and provide stability when diluted in water. Desirably the RPS/GRAFT Copolymers are sufficiently hydrolytically stable and resistant to biological attack to provide adequate life time of the particles in the soil.

The formulations of the present invention are useful in a method for the control of the growth of agricultural pests in foliar or soil environments wherein said pest or their foliar or soil environments are contacted with a pesticidally effective amount of the stable aqueous emulsion formulation of the present invention.

The invention is further illustrated by the following examples wherein all parts are by weight unless otherwise specified.

## Preparation of Starting Materials

### Example A: Reactive Polymeric Surfactant (RPS) Having Pendant Methacrylate Groups

A base polymeric surfactant was prepared by adding 1000 parts of isopropanol and 650 parts of deionized water to a stirred reactor provided with a nitrogen atmosphere and maintained at 50 °C while continuously adding reactants from five separate sources with proportionate feeds over 120 minutes and the resulting polymerization was allowed to continue for an additional 2 hours. Feed compositions were as follows:

| Feed | Parts | Component |
|---|---|---|
| 1 | 1000.00 | Deionized Water |
| | 384.00 | 2-Sulfoethyl Methacrylate |
| | 62.20 | Dimethylaminoethyl methacrylate |
| 2 | 554.00 | Methylmethacrylate |
| 3 | 6.18 | 2-Mercaptoethanol |
| | 114.00 | Deionized Water |
| 4 | 2.00 | Tert-butyl Hydroperoxide |
| | 118.00 | Deionized Water |
| 5 | 1.50 | Sodium Formaldehyde Hydrosulfite |
| | 118.50 | Deionized Water |

Twenty five hundred parts of deionized water were added followed by volatilization of 1700 parts. The resulting water soluble polymeric surfactant was converted to a reactive polymeric surfactant with pendant methacrylate vinyl sites by mixing with 56.3 parts of glycidyl methacrylate while heating for 2 hours at 50 °C ($RPS^{\ominus}$). The reactive polymeric surfactant, $RPS^{\ominus}$, had a solid content of 22.1 percent (21.8 percent solids by material balance), a total anionic charge of 1.87 milliequivalents per gram of solids and a number average molecular weight of less than 40,000.

<u>Preparation of Carrier Material</u>

<u>Example B</u>: Preparation of ($RPS^{\ominus}$/Graft) Copolymers

Hydrophobic styrene/2-ethyl hexyl acrylate copolymer chains were attached to water soluble reactive polymeric surfactant chains through emulsion copolymerization. A mixture was prepared by stirring 100 parts of each of styrene and 2-ethyl hexyl acrylate in an aqueous solution of 1448 parts of deionized water, 10 parts of isopropanol and 909 parts of $RPS^{\ominus}$ (22 percent solids by material balance). This monomer emulsion was heated to and maintained at 50 °C under a nitrogen atmosphere while adding proportionately from separate feed systems of 0.40 part tert-butyl hydroperoxide in 50 parts of water and 0.30 parts sodium formaldehyde hydrosulfite in 50 parts water over about 30 minutes and heating was continued for another 3 hours. An aliquot revealed (a) a 15 percent solids content indicating the reaction to be complete (b) a 0.94 milliequivalent anionic charge per gram solids and (c) a very small particle size as indicated by its translucent, bluish appearance. The designation for this $RPS^{\ominus}$ graft copolymer is:

$$\left( \begin{array}{c} 50\ /\ 25\ /\ 25 \\ RPS^{\ominus}/\ S\ /2\text{-}EHA \end{array} \right)$$

A portion was concentrated to 40 percent solids and still had a pourable viscosity at room temperature. $\eta$-Butyl acrylate was substituted for 2-ethyl-hexyl acrylate to make hydrophobic grafts on $RPS^{\ominus}$. A similar composition was

$$\left( \begin{array}{c} 50\ /\ 25\ /\ 25 \\ RPS^{\ominus}/\ S\ /n\text{-}BA \end{array} \right)$$

## Preparation of Final Product

Example 1 : Evaluation of RPS, RPS$^{\ominus}$/Graft Copolymers etc

| Formulation | | |
|---|---|---|
| Components | Non-Aqueous in parts by weight | Total in parts by weight |
| Chlorpyrifos | 2 | 2 |
| Cosolvent | 1 | 1 |
| Cosurfactant | 1 | 1 |
| RPS⊖/Graft Copolymer | 1 | Variable |
| Water | | Variable |
| | 5 | 10 |

The following formulation results show parameters for obtaining freeze-thaw stability:

(1) Cosurfactant

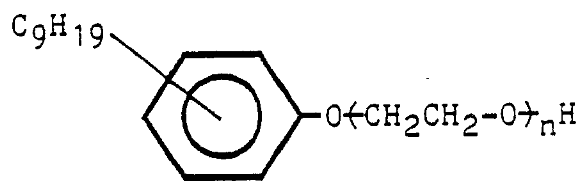

wherein n is an integer of from 5-9;

(2) Methyl laurate as cosolvent, and

(3) $\left(\begin{array}{c} 50\ /\ 25\ /\ 25 \\ RPS^{\ominus}/\ S\ /2\text{-}EHA \end{array}\right)$

as (RPS$^{\ominus}$/Graft)

| COSURFACTANT | | | Formulation Stability | |
|---|---|---|---|---|
| n | Water Solubility | HLB(1) | Room Temp. | Freeze-Thaw |
| 4 | Insoluble | 8.8 | Slight Settling(3) | Phase separation |
| 5 | Dispersible | 10.0 | Excellent(2) | >3 cycles |
| 6 | Dispersible | 10.8 | Excellent(2) | >3 cycles |
| 8 to 9 | Soluble | 12.2 | Very Slight Settling(4) | >3 cycles |
| 9 | Soluble | 13.0 | Very Slight Settling(4) | >3 cycles |
| 9 to 10 | Soluble | 13.3 | Very Slight Settling(4) | Very Slight Settling |
| 15 | Soluble | 15.0 | 2-phases(5) | Can't be tested |

(1) Hydrophilic-Lipophilic Balance (HLB) number.
(2) Excellent = no particle disassociation
(3) Slight Settling = some visual particle disassociation
(4) Very Slight Settling = almost no visual particle disassociation
(5) 2-phases = complete particle disassociation

Best cosurfactants for optimum freeze-thaw stability are the polyoxyethylated nonylphenols wherein (n) ranges from 5 to 9 and preferably 5 to 7 and the HBL values are from 10 to 13. It is noted that the cosurfactants wherein (n) is 4 or 15 and the HBL value is below 10 and above 13 are unacceptable. Acetyl tributyl citrate substitutes for methyl laurate and

$$\left( \begin{matrix} 50 \ / \ 25 \ / \ 25 \\ RPS^{\ominus} / \ S \ /2\text{-}n\text{-}BA \end{matrix} \right)$$

substitutes for the

$$\left( \begin{matrix} 50 \ / \ 25 \ / \ 25 \\ RPS^{\ominus} / \ S \ /2\text{-}EHA \end{matrix} \right)$$

in the preferable cosurfactant range.

Example 2: Organic Based Concentrate Invertible to Stable Aqueous Emulsion by Reactive Polymeric Surfactant Graft Copolymers

The following procedure was used to make an organic-based concentrate. A compatible mixture was formed with 300 parts of chlorpyrifos, 300 parts of polyoxyethylated nonylphenol (wherein n equals about 8), 100 parts of Reactive Polymeric Surfactant Graft Copolymer (as solids in an aqueous dispersion)

$$\left( \begin{matrix} 50 \ / \ 25 \ / \ 25 \\ RPS^{\ominus} / \ S \ /n\text{-}BA \end{matrix} \right),$$

and 1200 parts of isopropanol. The mixture was heated to about 50° C and vacuum stripped to remove the isopropanol and most of the water. The loading was about 42 weight percent chlorpyrifos or about 0.45

kilogram/liter. Small, stable oil-in-water particles were generated upon dilution in excess water. If the (RPS$^{\ominus}$/Graft) Copolymer was replaced with additional monomeric cosurfactant, the dilute oil-in-water particles phase separated in a short period of time, thus requiring agitation of the formulation to ensure uniform application.

Example 3 : Soil Penetration Evaluation

A Formulation comprising in parts by weight

| | |
|---|---|
| Chlorpyrifos | 2.0 |
| Methyl Laurate | 2.0 |
| Cosurfactant (1) of Example 3 | 1.0 |
| RPS$\ominus$/S/2-EHA | 1.0 |
| Deionized Water | 5.4 |

was prepared. An amount containing 500 mg of formulated chlorpyrifos in 3.0 mL volume was diluted to 50 mL total volume with deionized water and introduced into a 2 inch diameter 18 inch high column containing about 1150 grams dry soil (source is Midland, Michigan). The column was then eluted with about 650 mL deionized water and 450 mL of eluent was collected. The column was then frozen and cut into 4 equal quarters and analyzed for chlorpyrifos concentration by extracting the soil with cyclohexane. Two separate columns were tested with the following results:

| | Quarter | Mg Chlorpyrifos | % Distribution | % Recovery |
|---|---|---|---|---|
| Column A | 1 | 263.8 | 52.8 | |
| | 2 | 178.1 | 35.6 | 99.9 |
| | 3 | 51.1 | 10.2 | |
| | 4 | 6.7 | 1.4 | |
| Column B | 1 | 250.8 | 56.6 | |
| | 2 | 140.5 | 31.7 | 88.8 |
| | 3 | 41.6 | 9.4 | |
| | 4 | 10.6 | 2.4 | |

Example 4: Pesticide Activity

The organic pesticides employed in the stable aqueous emulsion formulation of the water insoluble organic pesticide/polymeric micelle mixtures of the present invention have all been found to maintain their basic biological activity in the formulations of the instant invention as compared to the basic biological activity of the pesticides when the pesticide was used in conventional formulations. Foliar and soil applications data are shown in Tables I and II respectively.

TABLE I

| Four-day residual toxicity of formulation Example 5 to beet armyworm on cotton leaves. Percent mortality was evaluated 72 hours after infestation | |
|---|---|
| Chlorpyrifos concentration (ppm) | Percent Mortality |
| 400 | 100 |
| 100 | 100 |
| 25 | 100 |
| 6.3 | 30 |
| 1.6 | 10 |
| control | 0 |

TABLE II

| Thirty-day residual toxicity of formulation Example 5 to western spotted cucumber beetle in California sandy loam soil. Percent mortality was evaluated 72 hours after infestation. | |
|---|---|
| Chlorpyrifos concentration (ppm) | Percent Mortality |
| 5.00 | 100 |
| 2.50 | 100 |
| 1.25 | 100 |
| 0.63 | 100 |
| 0.31 | 17 |
| 0.15 | 21 |
| Thirty-day residual toxicity of formulation Example 5 to western spotted cucumber beetle in California sandy loam soil. Percent mortality was evaluated 72 hours after infestation. | |
| Chlorpyrifos concentration (ppm) | Percent Mortality |
| control | 7 |

## Claims

1. A pesticidal formulation which comprises a non-aqueous emulsifiable concentrate of a water-insoluble organic pesticide said concentrate comprising an association of (1) a water insoluble organic pesticide and (2) an aqueous dispersion of a graft copolymer comprised of a pH independent reactive polymeric surfactant and at least one nonionic hydrophobic monomer.

2. A formulation as claimed in Claim 1 wherein the reactive polymeric surfactant comprises a copolymer of a pH independent anionic monomer and a nonionic monomer.

3. A formulation as claimed in any one of Claim 2 wherein the anionic monomer is 2-sulfoethyl methacrylate.

4. A formulation as claimed in any one of Claims 1-2 wherein the nonionic monomer comprises a hydrogen bonding donor.

5. A formulation as claimed in any one of Claims 2 or 4 wherein the nonionic monomer is methyl methacrylate.

6. A formulation as claimed in any one of Claims 1-5 wherein a cosolvent is also present.

7. A concentrate as claimed in Claim 6 wherein the cosolvent is methyl laurate.

8. A formulation as claimed in any one of Claims 1-7 wherein a cosurfactant is also present.

9. A formulation as claimed in Claim 8 wherein the cosurfactant is a polyoxyethylene adduct of nonyl phenols.

10. A formulation as claimed in any one of Claims 1-9 wherein the pesticide is chlorpyrifos.

11. A stable aqueous emulsion pesticidal formulation of a water-insoluble organic pesticide said formulation comprising an association of the formulation as claimed in any one of the preceding claims and water.

12. A formulation as claimed in Claim 11 wherein the graft copolymer has a Tg below use temperature.

13. A formulation as claimed in Claim 12 wherein the graft copolymer forms a micellar structure in the aqueous emulsion wherein the hydrophobic portion of the copolymer is stabilized by the pH independent reactive polymeric surfactant.

14. A method for the control of the growth of agricultural pests in foliar or soil environments which comprises contacting said pest or their foliar or soil environments with a pesticidally effective amount of a stable aqueous emulsion as defined in any one of Claims 11-13.